# EUROPÄISCHE PATENTSCHRIFT

(11) **EP 0 746 483 B1**
(45) Veröffentlichungstag und Bekanntmachung des Hinweises auf die Patenterteilung: **12.05.1999**
(21) Anmeldenummer: 95908199.3
(22) Anmeldetag: 17.02.1995
(51) Int. Cl.: B60S 1/38

(54) **WISCHVORRICHTUNG FÜR SCHEIBEN VON KRAFTFAHRZEUGEN**
WIPER DEVICE FOR MOTOR VEHICLE WINDSCREENS
DISPOSITIF D'ESSUIE-GLACE POUR VEHICULES AUTOMOBILES

(30) Priorität: 03.03.1994 DE 4407050
(43) Veröffentlichungstag der Anmeldung: 11.12.1996
(73) Patentinhaber: ROBERT BOSCH GMBH, 70442 Stuttgart (DE)
(72) Erfinder: KESSLER, Peter, D-77880 Sasbach (DE)
(86) Internationale Anmeldenummer: DE9500198
(87) Internationale Veröffentlichungsnummer: WO9523713

(56) Entgegenhaltungen:
- EP-A- 0 236 061
- DE-U- 8 808 315

## Beschreibung

### Stand der Technik

Die Erfindung geht aus von einer Wischvorrichtung nach der Gattung des Hauptanspruchs, wobei die Wischvorrichtung nach der DE-U-88 08315.2 alle im Oberbegriff des Hauptanspruchs enthaltenen Merkmale aufweist. Es ist schon eine Wischvorrichtung bekannt (DE-A-40 32 428), bei der an einem Gelenkstück an den freien Enden seiner U-Schenkel die freien Enden der U-Schenkel des Oberbügels hintergreifende Rasthaken angeordnet sind, so daß das Gelenkstück fest mit dem Oberbügel verbunden ist.Danach wird der Oberbügel über den Unterbügel gedrückt, wobei die Gelenkvorsprünge über den in seiner Breite nachgebenden Unterbügel geschoben werden müssen, bis die Gelenkvorsprünge in die Lagerausnehmungen des Unterbügels gelangen. Dabei besteht aber die Gefahr, daß der Unterbügel bleibend verformt wird, so daß zwecks einer sicheren Lagerung der beiden Bügel aneinander der Unterbügel wieder auseinander gedrückt werden muß.

### Vorteile der Erfindung

Die erfindungsgemäße Wischvorrichtung mit den kennzeichnenden Merkmalen des Hauptanspruchs hat demgegenüber den Vorteil, daß bei der Montage der beiden Bügel aneinander alleine das Rastelement elastisch ausgelenkt wird. Eine Verformung der Bügel wird dadurch vermieden und die Nacharbeit entfällt.

Durch die in den Unteransprüchen aufgeführten Maßnahmen sind vorteilhafte Weiterbildungen und Verbesserungen der im Hauptanspruch angegebenen Wischvorrichtung möglich.

### Zeichnung

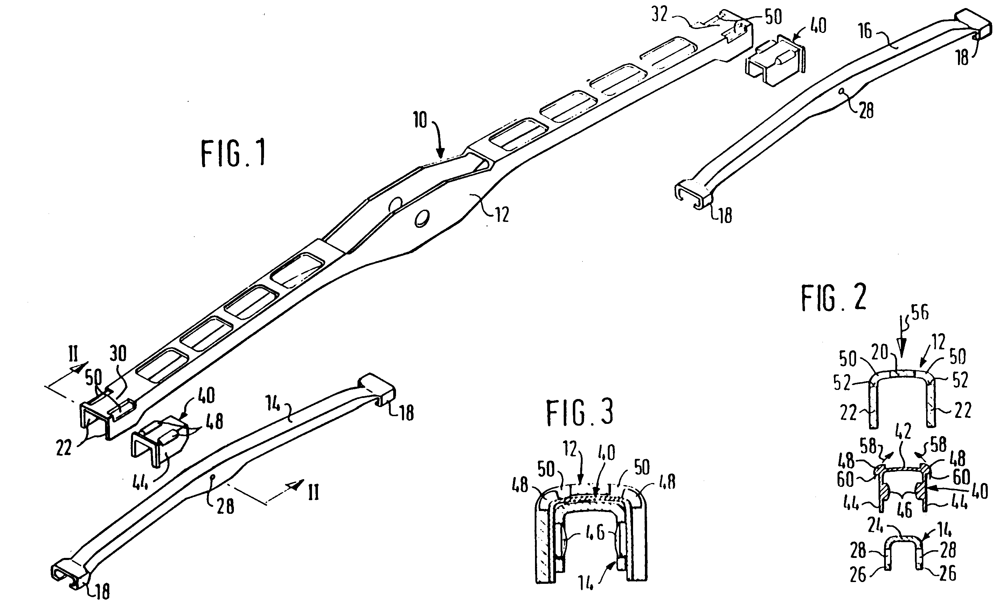

Ein Ausführungsbeispiel der Erfindung ist in der Zeichnung dargestellt und in der nachfolgenden Beschreibung näher erläutert. Es zeigen Figur 1 das zu einem Wischblatt einer Wischvorrichtung für Scheiben von Kraftfahrzeug gehörende Traggestell in einer Explosionsdarstellung, Figur 2 einen Schnitt durch die Gestellteile entlang der Linie II-II in Figur 2 in vergrößerter Darstellung und Figur 3 die Traggestellteile gemäß Figur 2 in montiertem Zustand, vergrößert dargestellt.

### Beschreibung des Ausführungsbeispiels

Zu einem in Figur 1 dargestellten Traggestell 10 gehören ein übergeordneter Bügel 12, der im folgenden als Hauptbügel bezeichnet wird und zwei untergeordnete Bügel 14 und 16, die nachfolgend als Krallenbügel bezeichnet werden. Die beiden Krallenbügel 14 und 16 weisen an ihren Enden krallenartige Ansätze 18 auf, die zum Fassen einer nicht dargestellten, auf der zu wischenden Scheibe aufliegenden Wischleiste dienen. Die Krallenbügel 14 und 16 werden an den beiden Enden des Hauptbügels 12 waagebalkenartig angelenkt. Sowohl der Hauptbügel 12 als auch die beiden Krallenbügel 14 und 16 weisen einen im wesentlichen U-förmigen Querschnitt auf (Figur 2). Der Hauptbügel 12 hat somit eine U-Basis 20, welche in die beiden zueinander parallelen U-Schenkel 22 übergeht. Auch die U-Basis 24 der Krallenbügel 14 und 16 ist mit U-Schenkeln 26 versehen. Weiter weisen die beiden U-Schenkel 26 der Krallenbügel 14 und 16 in ihrem Mittelbereich jeweils einen Lagerdurchbruch 28 auf. Die Lagerdurchbrüche 28 der U-Schenkel 26 fluchten miteinander.

Zur gelenkigen Befestigung der Krallenbügel 14 und 16 an den beiden Enden 30 und 32 des Hauptbügels 12 hat das Tragbügelgestell 10, vorzugsweise aus einem elastisch verformbaren Kunststoff hergestellte Gelenkstücke 40, die im Querschnitt ebenfalls U-förmig ausgebildet sind (Figur 2). Dabei ist jedem Ende 30, 32 des Hauptbügels 12 ein Gelenkstück 40 zugeordnet. Da die beiden Gelenkstücke 40 völlig gleich ausgebildet sind und auch in gleicher Weise montiert werden, soll im folgenden lediglich die Ausgestaltung des dem Ende 30 zugeordneten Gelenkstücks 40 erläutert werden. Das U-förmige Gelenkstück 40 hat eine U-Basis 42, an welche sich die beiden U-Schenkel 44 anschließen. Jeder der beiden U-Schenkel 44 ist mit einem zapfenartigen Gelenkvorsprung 46 versehen, deren Durchmesser auf die Durchmesser der Lagerdurchbrüche 28 in de U-Schenkeln 26 des Krallenbügels 14 abgestimmt sind. Weiter sind im Übergangsbereich der U-Schenkel 44 zu der U-Basis 42 an dem Gelenkstück 40 leistenartige, sich in Längsrichtung des langgestreckten Traggestells 10 erstreckende, elastisch auslenkbare Rastelemente 48 angeordnet, denen schlitzartige Durchbrüche 50 im Hauptbügel 12 zugeordnet sind. Die schlitzartigen Durchbrüche 50 befinden sich im Übergangsbereich zwischen der U-Basis 20 zu den U-Schenkeln 22. Wie insbesondere aus Figur 2 ersichtlich ist, erstrecken sich die schlitzartigen Durchbrüche 50 von der U-Basis 20 bis in die U-Schenkel 22, so daß sich an den U-Schenkeln Begrenzungskanten 52 ergeben.

Die Montage der Krallenbügel 14, 16 an dem Hauptbügel 12 soll anhand von Figur 2 näher erläutert werden. Zunächst wird das Gelenkstück 40 unter Auslenkung seiner U-Schenkel 44 in Richtung des Pfeiles 56 so über Krallenbügel 14 geschoben, daß die an den Innenseiten der U-Schenkel 44 des Gelenkstücks 40 angeordneten Lagerzapfen 46 in die ihnen zugeordneten Lagerausnehmungen 28 des Krallenbügels 14 einrasten. Nun wird der Hauptbügel 12 ebenfalls in Richtung des Pfeiles 56 über den mit dem Gelenkstück 40 versehenen Krallenbügel 14 gedrückt. Dabei werden jedoch lediglich die beiden Rastelemente 48 des Schenkelstücks 40 in Richtung der Pfeile 58 ausgelenkt, so daß diese an den Innenseiten der U-Schenkel 22 des Hauptbügels 12 entlang gleiten, bis sie in den Bereich der schlitzartigen Durchbrüche 50 gelangen. Dann federn die Rastelemente 48 wieder in ihre in Figur 2 dargestellte Ausgangsposition zurück, wobei an den Rastelementen 48 angeordnete Rastflächen 60 im Zusammenwirken mit den Begrenzungskanten 52 der schlitzartigen Durchbrüche 50 eine Verrastung zwischen Hauptbügel 12 und Krallenbügel 14 ergeben. Die Begrenzungskanten 52 bilden also Gegenrastmittel für die im Querschnitt hakenartigen Rastelemente 48 der Gelenkstücke. Das Gelenkstück 40 ist nun fest und undrehbar mit dem Hauptbügel 12 verbunden. Der Krallenbügel 14 jedoch ist gegenüber dem Hauptbügel waagebalkenartig beweglich aufgehängt, weil die Lagerbohrungen 28 in den U-Schenkeln 26 des Krallenbügels 14 eine Pendelbewegung des Krallenbügels 14 gegenüber den Gelenkzapfen 46 ermöglichen (Figur 3). Die wirksame Höhe der Rastelemente 48 ist dabei so bemessen, daß diese nicht größer ist als die Materialdicke des Oberbügels. Dadurch soll ein Überstehen der Rastelemente 48 über die Außenkontur des Hauptbügels 12 und damit ein unbeabsichtigtes Lösen der Rastverbindung zwischen dem Hauptbügel 12 und dem Krallenbügel 14 bzw. dem mit dem Krallenbügel gelenkig verbundenen Gelenkstück 40 vermieden werden.

## Patentansprüche

1. Wischvorrichtung für Scheiben von Kraftfahrzeugen, mit einem Wischblatt, das ein mehrgliedriges Gestell (10) hat, an welchem ein auf der Scheibe angelegtes Wischelement gehalten ist und das Gestell einen übergeordneten, im Querschnitt im wesentlichen U-förmigen Bügel (12) aufweist, an dessen zumindest einem Ende (30) ein zwischen die U-Schenkel des übergeordneten Bügels (12) eintauchender, untergeordneter Bügel (14, 16) waagebalkenartig angelenkt ist und zwischen den einander zugewandten Flächen der Ober- und Unterbügel (12; 14, 16) ein mit dem Oberbügel (12) verrastbares zumindest im Einbbauzustand U-förmiges, elastisch verformbares Gelenkstück (40) angeordnet ist, das mit an den Innenseiten seiner U-Schenkel angeordneten, gegeneinander gerichteten Gelenkvorsprüngen (46) in Lagerausnehmungen (28) des Unterbügels (14, 16) greift, wobei der Oberbügel (12) zumindest einen Durchbruch (50) hat, dadurch gekennzeichnet, daß der Durchbruch (50) im Übergangsbereich mindestens eines U-Schenkels (22) zu der U-Basis (20) angeordnet ist und durch den Durchbruch (50) ein mit dem Gelenkstück (40) verbundenes Rastelement (48) unter elastischer Auslenkung mit dem Oberbügel (12) verrastend hindurchtritt.

2. Wischvorrichtung nach Anspruch 1, dadurch gekennzeichnet, daß der Oberbügel (12) zwei im Übergangsbereich von der U-Basis (20) zu den U-Schenkeln (22) angeordnete Durchbrüche (50) aufweist, denen jeweils ein Rastelement (48) des Gelenkstücks (40) zugeordnet ist.

3. Wischvorrichtung nach einem der Ansprüche 1 oder 2, dadurch gekennzeichnet, daß die Durchbrüche (50) schlitzartig ausgebildet sind und sich die Schlitze in Längsrichtung des Oberbügels (12) erstrecken.

4. Wischvorrichtung nach Anspruch 3, dadurch gekennzeichnet, daß die hakenartigen Rastelemente (48) leistenartig ausgebildet sind und sich in Längsrichtung des Oberbügels (12) erstrecken.

5. Wischvorrichtung nach einem der Ansprüche 2 bis 4, dadurch gekennzeichnet, daß sich die Durchbrüche (50) von der U-Basis (20) bis in die U-Schenkel (22) erstrecken und daß die an den U-Schenkeln (22) ausgebildeten Begrenzungskanten (52) die Gegenrastmittel für die im Querschnitt hakenartigen Rastelemente (48) des Gelenkstücks (40) bilden.

6. Wischvorrichtung nach einem der Ansprüche 1 bis 5, dadurch gekennzeichnet, daß die zur Rastung wirksame Höhe der Rastelemente (48) der Materialdicke des Oberbügels (12) entspricht.

## Claims

1. Wiper device for motor-vehicle windows, having a wiper blade which has a multi-section frame (10) on which a wiper element, which is laid against the window, is supported, and the frame has a primary bow (12) which is essentially U-shaped in cross-section and to whose at least one end (30) is coupled, in the manner of a balance arm, a secondary bow (14, 16) which is placed between the U-legs of the primary bow (12), and an elastically deformable hinge piece (40), which at least when installed is U-shaped and which can be latched to the upper bow (12), is arranged between the mutually facing surfaces of the upper and lower bows (12; 14, 16) and, by means of hinge projections (46) which are arranged on the insides of its U-legs and are directed towards one another, grips in bearing recesses (28) in the lower bow (14, 16), the upper bow (12) having at least one opening (50), characterized in that the opening (50) is arranged in the transition region at least of one U-leg (22) to the U-base (20), and a latching element (48), which is connected to the hinge piece (40), is elastically deflected by the upper bow (12) and thus passes in a latching manner through the opening (50).

2. Wiper device according to Claim 1, characterized in that the upper bow (12) has two openings (50) which are arranged in the transition region from the U-base (20) to the U-legs (22) and which are each assigned a latching element (48) of the hinge piece (40).

3. Wiper device according to either of Claims 1 and 2, characterized in that the openings (50) are of slot-like design, and the slots extend in the longitudinal direction of the upper bow (12).

4. Wiper device according to Claim 3, characterized in that the hook-like latching elements (48) are of strip-like design and extend in the longitudinal direction of the upper bow (12).

5. Wiper device according to one of Claims 2 to 4, characterized in that the openings (50) extend from the U-base (20) into the U-legs (22), and the boundary edges (52) which are formed on the U-legs (22) form the counter-latching means for the cross-sectionally hook-like latching elements (48) of the hinge piece (40).

6. Wiper device according to one of Claims 1 to 5, characterized in that the height of the latching elements (48) which is effective for the latching corresponds to the material thickness of the upper bow (12).

## Revendications

1. Dispositif d'essuie-glace pour véhicules automobiles, dans lequel :
- une raclette d'essuie-glace, présente une monture (10) en plusieurs pièces qui porte un élément d'essuyage appliqué sur la glace et qui comprend un étrier (12), situé au dessus et à section sensiblement en forme de U, dont au moins une extrémité (30) porte, articulé entre les ailes du U à la manière d'un fléau de balance, un étrier (14, 16) situé en dessous,
- entre les surfaces en regard de l'étrier supérieur (12) et des étriers inférieurs (14, 16) est montée une pièce d'articulation (40) faite d'un matériau déformable élastiquement, présentant au moins à l'état monté la forme d'un U et pouvant être bloquée sur l'étrier supérieur (12),
- la pièce d'articulation (40) est en prise, par des saillies (46) situées à l'opposé l'une de l'autre sur les faces internes des ailes de son U, dans des évidements (28) formant paliers, creusés dans l'étrier inférieur (14, 16),
- l'étrier supérieur (12) présente au moins une ouverture (50),
caractérisé en ce que
l'ouverture (50) est située dans la zone de transition entre au moins une aile (22) et la base (20) de la section en U de l'étrier supérieur, et un élément d'arrêt (48) relié à la pièce d'articulation (40) pénètre avec déformation élastique à travers l'ouverture (50) en bloquant l'étrier supérieur (12).

2. Dispositif selon la revendication 1,
caractérisé en ce que
l'étrier supérieur (12), dans la zone de transition entre la base (20) et les ailes (22) de sa section en U, présente des ouvertures (50) à chacune desquelles est associé un élément d'arrêt (48) de la pièce d'articulation (40).

3. Dispositif selon une des revendications 1 ou 2,
caractérisé en ce que
les ouvertures (50) ont la forme de fentes qui s'étendent selon la direction longitudinale de l'étrier supérieur (12).

4. Dispositif selon la revendication 3,
caractérisé en ce que
les éléments d'arrêt (40) du genre crochet, ont la forme de barrettes qui s'étendent selon la direction longitudinale de l'étrier supérieur (12).

5. Dispositif selon une des revendications 2 à 4,
caractérisé en ce que
les ouvertures (50) s'étendent de la base (20) aux ailes (22) du U, les bords (52) de ces ouvertures dans les ailes (22) constituant les moyens de contreblocage des éléments d'arrêt (40) à section en forme de crochet, portés par la pièce d'articulation (40).

6. Dispositif selon une des revendications 1 à 5,
caractérisé en ce que
la hauteur efficace de blocage de l'élément d'arrêt (48) correspond à l'épaisseur du matériau constituant l'étrier supérieur (12).
